# EUROPÄISCHE PATENTANMELDUNG

(11) **EP 3 865 750 A1**
(43) Veröffentlichungstag der Anmeldung: **18.08.2021**
(21) Anmeldenummer: 21157021.3
(22) Anmeldetag: 15.02.2021
(51) Int. Cl.: F16L 5/14, H02G 3/22, F16L 11/118, F16L 25/00, F16L 33/24

(54) **GEBÄUDEEINFÜHRUNGSVORRICHTUNG**

(30) Priorität: 17.02.2020 DE 102020201945; 19.02.2020 DE 102020202072
(71) Anmelder: Fränkische Rohrwerke Gebr. Kirchner GmbH + Co KG, 97486 Königsberg/Bayern (DE)
(72) Erfinder: THEIN, Jürgen, 97437 Haßfurt (DE); BULD, Sascha, 97486 Königsberg (DE)
(74) Vertreter: Weickmann & Weickmann PartmbB

(57) **Zusammenfassung**

Die Erfindung betrifft eine Gebäudeeinführungsvorrichtung (100), welche dazu ausgebildet und bestimmt ist, wenigstens eine vorbestimmte Medienspartenleitung aus der äußeren Umgebung eines Gebäudes in den Innenraum (I) des Gebäudes einzuführen. Die Gebäudeeinführungsvorrichtung umfasst ein Einführungselement (102) mit einer Basisplatte (110), welche dazu ausgebildet und bestimmt ist, an einer Außenwandung (112) des Gebäudes befestigt zu werden, und mit einem eine Durchgangsöffnung (102a) der Basisplatte (110) umgebenden und mit der Basisplatte (110) verbundenen oder verbindbaren Rohrstutzen (114) und ein doppelwandiges Wellrohr (104). Erfindungsgemäß ist auf der von dem Rohrstutzen (114) abgewandten Seite der Basisplatte (110) ein mit einem Außengewinde (118) versehener weiterer Rohrstutzen (116) vorgesehen, wobei eine äußere Oberfläche des weiteren Rohrstutzens (116) zumindest in einem dem freien Ende des weiteren Rohrstutzens (116) benachbarten Längenabschnitt (116b) einen Durchmesser (D1) auf, der kleiner ist als der Durchmesser (D2) einer inneren Oberfläche des Innenrohrs (108) des doppelwandigen Wellrohrs (104), und wobei die äußeren Spitzen des Gewindes (118) einen Durchmesser (D3) aufweisen, der größer ist als der Durchmesser (D2) der inneren Oberfläche des inneren Rohrs (108) des doppelwandigen Wellrohrs (104).

## Beschreibung

Die Erfindung betrifft eine Gebäudeeinführungsvorrichtung, welche dazu ausgebildet und bestimmt ist, wenigstens eine vorbestimmte Medienspartenleitung aus der äußeren Umgebung eines Gebäudes in den Innenraum des Gebäudes einzuführen, die Gebäudeeinführungsvorrichtung umfassend ein Einführungselement mit einer Basisplatte, welche dazu ausgebildet und bestimmt ist, an einer die äußere Umgebung des Gebäudes von dessen Innenraum trennenden Außenwandung des Gebäudes befestigt zu werden, und mit einem eine Durchgangsöffnung der Basisplatte umgebenden und mit der Basisplatte verbundenen oder verbindbaren Rohrstutzen, und ein doppelwandiges Wellrohr.

Auch wenn das Gebäude als solches nicht zum Anmeldungsgegenstand gehört, wird die Erfindung nachfolgend in den Schutzbereich nicht einschränkender Weise am Beispiel einer Hauseinführungsvorrichtung erläutert werden, über welche Medienspartenleitungen in ein Wohnhaus eingeleitet werden können. Die erfindungsgemäße Gebäudeeinführungsvorrichtung kann aber ebenso mit Vorteil bei einem Bürohaus, einer Fertigungs- und/oder Montagehalle oder dergleichen Gebäuden eingesetzt werden.

In analoger Weise gehören auch die Medienspartenleitungen nicht zum Anmeldungsgegenstand. Als Medienspartenleitungen sind insbesondere Wasserleitungen, Gasleitungen, Stromleitungen und Informationsleitungen, beispielsweise Telefonleitungen, Fernsehleitungen oder Internetleitungen, zu nennen.

Ferner sei bereits an dieser Stelle erwähnt, dass die Außenwandung des Gebäudes, an der die Basisplatte befestigt werden kann, nicht notwendigerweise eine vertikal verlaufende Außenwand, insbesondere Kellerwand, zu sein braucht, sondern auch, ja sogar bevorzugt, eine horizontal verlaufende Bodenplatte, insbesondere Kellerbodenplatte, sein kann.

Üblicherweise geht von der Basisplatte des Einführungselements auf deren von dem Rohrstutzen abgewandter Seite ein glattwandiges Rohr aus, das im Erdreich unter der Bodenplatte des Gebäudes herausragt, so dass es dort mittels einer Muffenverbindung mit dem doppelwandigen Wellrohr verbunden werden kann. Das glattwandige Rohr, der Rohrstutzen und die Basisplatte sind dabei einstückig ausgebildet, um der von Bauvorschriften geforderten Zuglast von mindestens 2 t widerstehen zu können.

Nachteilig an der bekannten Gebäudeeinführungsvorrichtung ist zum einen ihr voluminöser Aufbau und zum anderen die aufwändige Art der Montage.

Es ist Aufgabe der vorliegenden Erfindung, hier Abhilfe zu schaffen.

Erfindungsgemäß wird diese Aufgabe durch eine Gebäudeeinführungsvorrichtung der eingangs genannten Art gelöst, bei welcher auf der von dem Rohrstutzen abgewandten Seite der Basisplatte ein mit einem Außengewinde versehener weiterer Rohrstutzen vorgesehen ist, wobei eine äußere Oberfläche des weiteren Rohrstutzens zumindest in einem dem freien Ende des weiteren Rohrstutzens benachbarten Längenabschnitt einen Durchmesser aufweist, der kleiner ist als der Durchmesser einer inneren Oberfläche des Innenrohrs des doppelwandigen Wellrohrs, und wobei die äußeren Spitzen des Gewindes einen Durchmesser aufweisen, der größer ist als der Durchmesser einer inneren Oberfläche des inneren Rohrs des doppelwandigen Wellrohrs.

Erfindungsgemäß kann das Einführungselement in einfacher Weise mit dem doppelwandigen Wellrohr verschraubt werden, wobei sich das Gewinde des weiteren Rohrabschnitts vor allem im Bereich der Wellentäler des gewellten Außenrohrs in das Innenrohr und gegebenenfalls auch in das Außenrohr des doppelwandigen Wellrohrs eingräbt, welches in der Außenwandung des Gebäudes befestigt ist, beispielsweise in diese einbetoniert ist. Überraschenderweise hat sich gezeigt, dass diese Schraubverbindung in der Lage ist, die geforderte Zugbelastbarkeit aufzubringen.

An dieser Stelle sei darauf hingewiesen, dass die Innenrohre von doppelwandigen Wellrohren auch dann, wenn sie nominell als glattwandige Innenrohre konzipiert sind, normalerweise fertigungsbedingt immer eine leichte Wellung im Bereich von 0,1 mm bis 1,0 mm, vorzugsweise etwa 0,5 mm, aufweisen. Es kann daher durchaus vorkommen, dass das Gewinde zwischen zwei Wellentälern des gewellten Außenrohrs des doppelwandigen Wellrohrs in geringerem Maße oder sogar gar nicht in das Innenrohr eingreift. Es hat sich jedoch gezeigt, dass der vorstehend beschriebene Eingriff im Bereich der Wellentäler des gewellten Außenrohrs ausreicht, um die geforderte Zugbelastbarkeit aufzubringen. Gemäß Vorstehendem kommt es bei einem Vergleich des Durchmessers der äußeren Oberfläche des weiteren Rohrstutzens und/oder des Durchmessers der äußeren Spitzen des Gewindes mit dem Durchmesser der inneren Oberfläche des Innenrohrs des doppelwandigen Wellrohrs bei einem leicht gewellten Innenrohr also auf den kleinesten Durchmesser der inneren Oberfläche des Innenrohrs des doppelwandigen Wellrohrs an.

In einer Weiterbildung der Erfindung kann das Gewinde als Mehrfachgewinde, insbesondere als Zweifachgewinde ausgeführt sein. Ein Mehrfachgewinde hat den Vorteil, dass das Gewinde mit einer größeren Steigung ausgelegt werden kann und somit weniger Umdrehungen zum Einschrauben benötigt werden. Aufgrund einer erhöhten Anzahl an Gewindegänge kann trotz größerer Steigung ein vergleichbarer Auszugswiderstand in axialer Richtung beibehalten werden.

Um das Einführen des mit dem Gewinde versehenen weiteren Rohrstutzens in das doppelwandige Wellrohr erleichtern zu können, wird vorgeschlagen, dass ein dem freien Ende des weiteren Rohrstutzens benachbarter Längenabschnitt des weiteren Rohrstutzens gewindefrei ausgebildet ist, also im Wesentlichen glattwandig ausgebildet ist. Somit wird der weitere Rohrstutzen in dem doppelwandigen Wellrohr bereits sicher geführt, wenn das Gewinde beginnt, mit dem Innenrohr des doppelwandigen Wellrohrs in Gewindeeingriff zu treten. Hierzu kann es ferner vorteilhaft sein, wenn die Länge des gewindefreien Längenabschnitts mindestens gleich der Wellenlänge des Außenrohrs des doppelwandigen Wellrohrs ist.

Um den Gewindeeingriff zwischen dem Gewinde und dem Innenrohr des doppelwandigen Wellrohrs allmählich und damit zentriert herbeiführen zu können, wird in Weiterbildung der Erfindung vorgeschlagen, dass der das Gewinde aufweisende Längenabschnitt des weiteren Rohrstutzens oder/und das Gewinde zumindest teilweise konisch ausgebildet sind, wobei sich der Konus zur Basisplatte hin weitet. Fertigungstechnisch ist dabei eine konische Ausbildung des Gewindes durch eine entsprechend variierende Höhe der Gewindezähne einfacher zu realisieren.

Da das doppelwandige Wellrohr aufgrund der Tatsache, dass es von Beton umgeben ist, den vom Gewindeeingriff herrührenden Kräften praktisch nicht ausweichen kann, wird zum Ausgleich von Toleranzen vorgeschlagen, dass der weitere Rohrstutzen derart dünnwandig ausgebildet ist, dass er bei Überschreiten einer vorbestimmten Grenzkraft, die für einen zuverlässigen Gewindeeingriff mit dem Innenrohr erforderlich ist, radial gestaucht werden kann.

Da bei der Fertigung von Wellrohren Durchmesserschwankungen auftreten können, kann das Gewinde insbesondere auf diese Durchmesserschwankungen anpassbar sein. Hierzu kann das Gewinde von der Einführseite in axialer Richtung über den Umfang mehrfach geschlitzt ausgeführt sein. Über den Spalt der Schlitze kann der Durchmesser des Gewindes bei zu kleinem Rohrdurchmesser verringert werden. Um die Stabilität des Gewindes zu gewährleisten, können die Schlitze mit einem elastischen Material ausgefüllt sein. Insbesondere kann diese Einheit unter Verwendung eines 2-K-Spritzgussverfahrens hergestellt werden.

Ferner kann vorgesehen sein, dass das Gewinde als Sägengewinde ausgebildet ist, wobei die schräge Flankenseite von der Basisplatte weg weist. Auf diese Weise kann die schräge Flankenseite die Funktion einer Einweisungsschräge übernehmen, während sich die vorzugsweise im Wesentlichen radial verlaufende rückseitige Flanke einem Herausziehen des Gewindes aus dem Innenrohr des doppelwandigen Wellrohrs Widerhaken-artig widersetzt und damit die Auszugswiderstandsfähigkeit der Gewindeverbindung erhöht.

Zur Erhöhung der Auszugswiderstandsfähigkeit der Gewindeverbindung kann ferner vorgesehen sein, dass die Wellenlänge des Außenrohrs des doppelwandigen Wellrohrs mindestens das Doppelte, vorzugsweise mindestens das Dreifache, der Steigung des Gewindes beträgt.

Um das Eingreifen des Gewindes in das Innenrohr des doppelwandigen Wellrohrs verbessern zu können, wird vorgeschlagen, dass das Innenrohr des doppelwandigen Wellrohrs aus Polyethylen hergestellt ist, oder/und dass das Einführungselement aus einem Polyamid, beispielsweise PA6 oder PA66, vorzugsweise aus einem glasfaserverstärkten Polyamid, beispielsweise GF30, hergestellt ist. Vorteilhafterweise kann das Einführungselement im Spritzgussverfahren hergestellt sein.

In Weiterbildung der Erfindung kann ferner vorgesehen sein, dass ein zwischen dem Gewinde und der Basisplatte angeordneter Längenabschnitt des weiteren Rohrstutzens gewindefrei ausgebildet ist.

Schließlich ist es zur Verbesserung der Dichtheit der Gewindeverbindung auch noch denkbar, dass zwischen dem Gewinde und der Basisplatte ein Dichtungselement angeordnet ist. Vorteilhafterweise kann das Dichtungselement einen radialen Kragen aufweisen, der dazu bestimmt ist, sich gegen die Basisplatte anzulegen. Vorteilhafterweise kann die Ringbreite des radialen Kragens einen Wert aufweisen, der wenigstens das 1,5-fache der Profilhöhe des gewellten Außenrohrs des doppelwandigen Wellrohrs beträgt. Auf diese Weise ist sichergestellt, dass sich der radiale Kragen weiter nach radial außen erstreckt als das doppelwandige Wellrohr. Auf diese Weise kann verhindert werden, dass etwaig zwischen dem doppelwandigen Wellrohr und dem Beton aufsteigende Feuchtigkeit in das Gebäude gelangt.

Das Dichtungselement kann zusammen mit der Basisplatte bzw. dem Rohrstutzen als 2-K-Spritzgussteil hergestellt werden. Dies kann neben einem verringerten Montageaufwand weiterhin den Vorteil aufweisen, dass das Dichtungselement bei einem Einschrauben in das Wellrohr im Wesentlichen lagegesichert ist.

Gemäß einer ersten Ausführungsalternative sind die Basisplatte, der Rohrstutzen und der weitere Rohrstutzen miteinander einstückig ausgebildet.

Gemäß einer zweiten Ausführungsalternative sind der Rohrstutzen und der weitere Rohrstutzen miteinander einstückig ausgebildet und weist die aus Rohrstutzen und weiterem Rohrstutzen gebildete Einheit ferner eine einstückig angeformte Ringplatte auf, die in einer korrespondierenden Ausnehmung der Basisplatte relativ verdrehbar anordenbar ist. Auf diese Weise kann eine Mehrzahl erfindungsgemäßer Gebäudeeinführungsvorrichtungen in raumsparender Weise dicht benachbart nebeneinander angeordnet werden. Dabei können die dicht nebeneinander angeordneten Platten miteinander verbindbar, beispielsweise steckbar, oder auch miteinander einstückig ausgebildet sein.

Bei beiden Ausführungsalternativen können zudem Mittel vorgesehen sein, welche dazu ausgebildet und bestimmt sind, zwischen dem Rohrstutzen und der Medienspartenleitung eine dichtende und/oder zugfeste Verbindung herzustellen.

Die Erfindung wird im Folgenden anhand der beigefügten Zeichnung an Ausführungsbeispielen näher beschrieben werden. Es stellt dar:
- Figur 1: eine Schnittansicht einer erfindungsgemäßen Gebäudeeinführungsvorrichtung gemäß einem ersten Ausführungsbeispiel;
- Figur 2: eine vergrößerte Schnittansicht eines Details aus Figur 1; und
- Figur 3: eine Ansicht ähnlich Figur 1 einer erfindungsgemäßen Gebäudeeinführungsvorrichtung gemäß einem zweiten Ausführungsbeispiel.

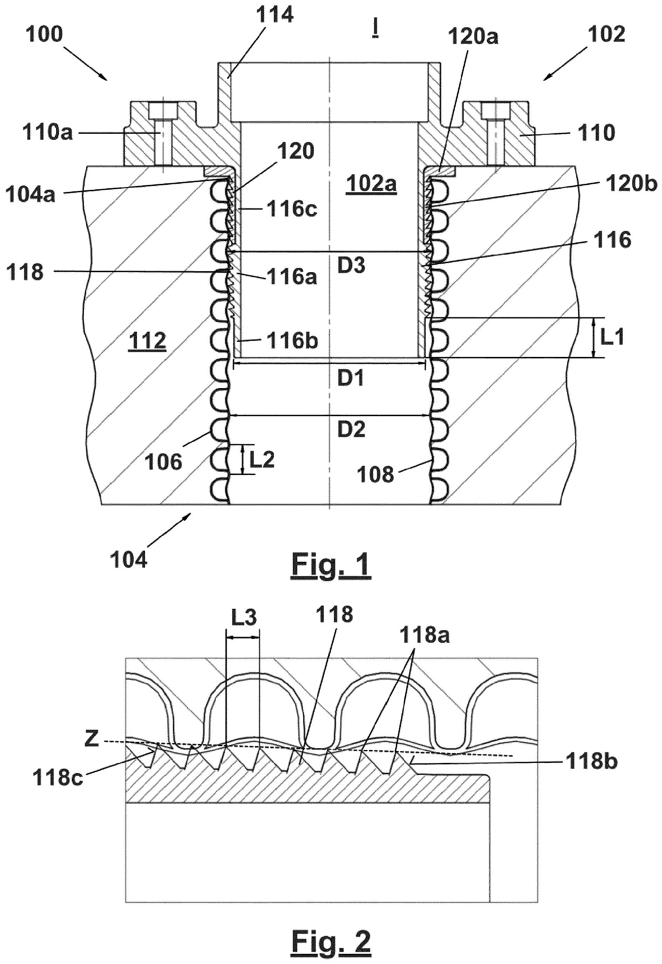

In Figur 1 ist eine erfindungsgemäße Gebäudeeinführungsvorrichtung allgemein mit 100 bezeichnet. Die Gebäudeeinführungsvorrichtung 100 umfasst ein Einführungselement 102 und ein doppelwandiges Wellrohr 104 mit einem gewellten Außenrohr 106 und einem im Wesentlichen glatten Innenrohr 108.

Das Einführungselement 102 umfasst eine Basisplatte 110, die zur Anlage an einer Außenwandung 112 eines Gebäudes dient, in das eine (nicht dargestellte) Medienspartenleitung eingeführt werden soll. Die Basisplatte 110 kann mittels (nicht dargestellter) Befestigungselemente an der Außenwandung 112 befestigt werden, welche Befestigungsöffnungen 110a der Basisplatte 110 durchsetzen und in die Außenwandung 112 eingreifen.

Auf ihrer dem Innenraum I des Gebäudes zugewandten Seite ist die Basisplatte 110 mit einem Rohrstutzen 114 ausgebildet, welcher dem Anschluss eines (nicht dargestellten) Dichtungselements dient, das die in das Gebäude eingeführte Medienspartenleitung dichtend und/oder zugaufnehmend umgibt. Ferner ist die Basisplatte 110 auf ihrer vom Innenraum I des Gebäudes abgewandten Seite mit einem weiteren Rohrstutzen 116 ausgebildet, der zumindest auf einem Abschnitt 116a seiner Länge mit einem Außengewinde 118 ausgebildet ist.

Die Basisplatte 110, der Rohrstutzen 114 und der weitere Rohrstutzen 116 sind vorzugsweise einstückig gefertigt und bilden zusammen das Einführungselement 102. Das Einführungselement 102 wird von einem Durchgangskanal 102a durchsetzt, durch den die (nicht dargestellte) Medienspartenleitung in das Gebäude eingeführt werden kann.

Das Außengewinde 118 ist dazu bestimmt, in das Innenrohr 108 des doppelwandigen Wellrohrs 104 einzugreifen, welches derart in die Außenwandung 112 einbetoniert ist, dass sein dem Gebäude zugewandtes Ende 104a in etwa auf gleicher Höhe wie die dem Innenraum I des Gebäudes zugewandte Oberfläche der Außenwandung 112 angeordnet ist. Ein gewindefreier Längenabschnitt 116b des weiteren Rohrstutzens 116 stellt sicher, dass der weitere Rohrstutzen 116 bereits zuverlässig in dem doppelwandigen Wellrohr 104 zentriert ist, bevor das Gewinde 118 mit dessen Innenrohr 108 in Eingriff tritt. Hierzu ist es vorteilhaft, wenn die Länge L1 des gewindefreien Längenabschnitts 116b mindestens gleich der Wellenlänge L2 des Außenrohrs 106 des doppelwandigen Wellrohrs 104 ist, vorzugsweise größer als diese ist.

Um den Gewindeeingriff zu ermöglichen, weist eine äußere Oberfläche des weiteren Rohrstutzens 116 zumindest in dem gewindefreien Längenabschnitt 116b einen Durchmesser D1 auf, der kleiner ist als der minimale Durchmesser D2 einer inneren Oberfläche des Innenrohrs 108 des doppelwandigen Wellrohrs 104, und weisen ferner die äußeren Spitzen des Gewindes 118 einen Durchmesser D3 auf, der größer ist als der Durchmesser D2.

Zur Erleichterung der Herstellung des Gewindeeingriffs zwischen dem Gewinde 118 und dem Innenrohr 108 des doppelwandigen Wellrohrs 104 kann, wie in Figur 2 dargestellt ist, der das Gewinde 118 aufweisende Längenabschnitt 116a des weiteren Rohrstutzens 116 oder/und die die Zahnspitzen 118a des Gewindes 118 verbindende Linie Z zumindest teilweise konisch ausgebildet sein, wobei sich der Konus zur Basisplatte 110 hin weitet.

Ferner kann das Gewinde 118 gemäß Figur 2 als Sägengewinde ausgebildet sein, wobei die schräge Flankenseite 118b von der Basisplatte 110 weg weist. Auf diese Weise kann die schräge Flankenseite 118b beim Einführen des weiteren Rohrstutzens 116 in das Innenrohr 108 die Funktion einer Einweisungsschräge übernehmen, während sich die vorzugsweise im Wesentlichen radial verlaufende rückseitige Flanke 118c einem Herausziehen des weiteren Rohrstutzens 116 aus dem Innenrohr 108 Widerhaken-artig widersetzt und damit die Auszugswiderstandsfähigkeit der Gewindeverbindung erhöht.

Wie man Figur 1 ferner entnimmt, beträgt die Wellenlänge L2 des Außenrohrs 106 des doppelwandigen Wellrohrs 104 ein Vielfaches der Steigung L3 des Gewindes 118. Auch dies verbessert den Eingriff zwischen Gewinde 118 und Innenrohr 108.

Nachzutragen ist noch, dass der weitere Rohrstutzen 116 zwischen seinem mit dem Gewinde 118 versehenen Längenabschnitt 116b und der Basisplatte 110 einen weiteren gewindefreien Längenabschnitt 116c aufweist.

Nachzutragen ist ferner, dass zwischen dem Gewinde 118 und der Basisplatte 110, also in dem gewindefreien Abschnitt 116c des weiteren Rohrstutzens 116, ein Dichtungselement 120 vorgesehen ist. Das Dichtungselement 120 weist einen radialen Kragen 120a auf, der dichtend zwischen der Basisplatte 110 und der Bodenplatte 112 liegt und zudem Dichtungslippen 120b, die dichtend an der inneren Oberfläche des Innenrohrs 108 anliegen.

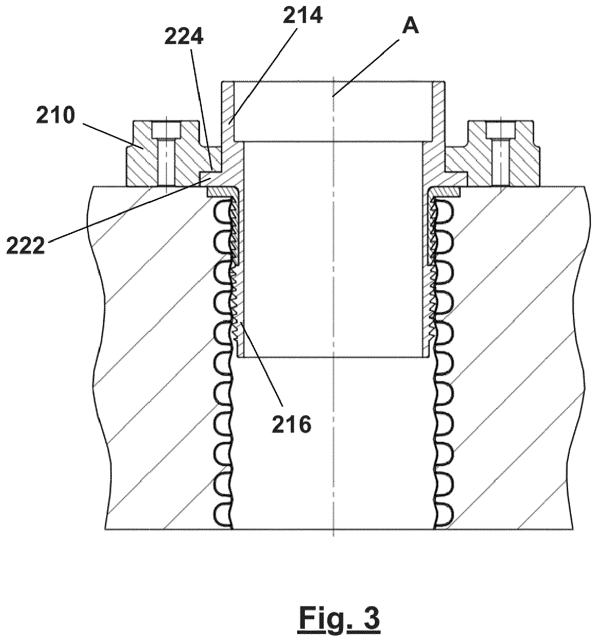

In Figur 3 ist ein weiteres Ausführungsbeispiel einer erfindungsgemäßen Gebäudeeinführungsvorrichtung dargestellt, welche in weiten Teilen dem Ausführungsbeispiel der Figuren 1 und 2 entspricht. Daher sind in Figur 3 analoge Teile mit den gleichen Bezugszeichen versehen wie in den Figuren 1 und 2, jedoch vermehrt um die Zahl 100. Darüber hinaus wird die Gebäudeeinführungsvorrichtung 200 der Figur 3 im Folgenden nur insoweit beschrieben werden, als sie sich von der Gebäudeeinführungsvorrichtung 100 der Figuren 1 und 2 unterscheidet, auf deren Beschreibung hiermit ansonsten ausdrücklich verwiesen wird.

Die Gebäudeeinführungsvorrichtung 200 der Figur 3 unterscheidet sich von der Gebäudeeinführungsvorrichtung 100 lediglich dadurch, dass lediglich der Rohrstutzen 214 und der weitere Rohrstutzen 216 einstückig miteinander ausgebildet sind, nicht aber die Basisplatte 210. Dafür weist die aus dem Rohrstutzen 214 und dem weiteren Rohrstutzen 216 gebildete Einheit ferner eine einstückig angeformte Ringplatte 222 auf, die in einer korrespondierenden Ausnehmung 224 der Basisplatte 210 relativ zu dieser um die Achse A der Rohrstutzen 214 und 216 verdrehbar aufgenommen werden kann.

## Patentansprüche

1. Gebäudeeinführungsvorrichtung (100), welche dazu ausgebildet und bestimmt ist, wenigstens eine vorbestimmte Medienspartenleitung aus der äußeren Umgebung eines Gebäudes in den Innenraum (I) des Gebäudes einzuführen, die Gebäudeeinführungsvorrichtung umfassend:
• ein Einführungselement (102) mit einer Basisplatte (110), welche dazu ausgebildet und bestimmt ist, an einer Außenwandung (112) des Gebäudes befestigt zu werden, und mit einem eine Durchgangsöffnung (102a) der Basisplatte (110) umgebenden und mit der Basisplatte (110) verbundenen oder verbindbaren Rohrstutzen (114) und
• ein doppelwandiges Wellrohr (104),
**dadurch gekennzeichnet, dass** auf der von dem Rohrstutzen (114) abgewandten Seite der Basisplatte (110) ein mit einem Außengewinde (118) versehener weiterer Rohrstutzen (116) vorgesehen ist,
wobei eine äußere Oberfläche des weiteren Rohrstutzens (116) zumindest in einem dem freien Ende des weiteren Rohrstutzens (116) benachbarten Längenabschnitt (116b) einen Durchmesser (D1) auf, der kleiner ist als der Durchmesser (D2) einer inneren Oberfläche des Innenrohrs (108) des doppelwandigen Wellrohrs (104), und
wobei die äußeren Spitzen des Gewindes (118) einen Durchmesser (D3) aufweisen, der größer ist als der Durchmesser (D2) der inneren Oberfläche des inneren Rohrs (108) des doppelwandigen Wellrohrs (104).

2. Gebäudeeinführungsvorrichtung nach Anspruch 1,
**dadurch gekennzeichnet, dass** ein dem freien Ende des weiteren Rohrstutzens (116) benachbarter Längenabschnitt (116b) des weiteren Rohrstutzens (116) gewindefrei ausgebildet ist,

3. Gebäudeeinführungsvorrichtung nach Anspruch 1 oder 2,
**dadurch gekennzeichnet, dass** die Länge (L1) des gewindefreien Längenabschnitts (116b) größer ist als die Wellenlänge (L2) des Außenrohrs (106) des doppelwandigen Wellrohrs (104).

4. Gebäudeeinführungsvorrichtung nach einem der Ansprüche 1 bis 3,
**dadurch gekennzeichnet, dass** der das Gewinde (118) aufweisende Längenabschnitt (116a) des weiteren Rohrstutzens (116) oder/und das Gewinde (118) zumindest teilweise konisch ausgebildet sind, wobei sich der Konus zur Basisplatte (110) hin weitet.

5. Gebäudeeinführungsvorrichtung nach einem der Ansprüche 1 bis 4,
**dadurch gekennzeichnet, dass** das Gewinde (118) als Sägengewinde ausgebildet ist, wobei die schräge Flankenseite (118b) von der Basisplatte (110) weg weist.

6. Gebäudeeinführungsvorrichtung nach einem der Ansprüche 1 bis 5,
**dadurch gekennzeichnet, dass** die Wellenlänge (L2) des Außenrohrs (106) des doppelwandigen Wellrohrs (104) mindestens das Doppelte, vorzugsweise mindestens das Dreifache, der Steigung (L3) des Gewindes (118) beträgt.

7. Gebäudeeinführungsvorrichtung nach einem der Ansprüche 1 bis 6,
**dadurch gekennzeichnet, dass** das Innenrohr (108) des doppelwandigen Wellrohrs (104) aus Polyethylen hergestellt ist.

8. Gebäudeeinführungsvorrichtung nach einem der Ansprüche 1 bis 7,
**dadurch gekennzeichnet, dass** das Einführungselement (102) aus einem, vorzugsweise glasfaserverstärkten, Polyamid hergestellt ist.

9. Gebäudeeinführungsvorrichtung nach einem der Ansprüche 1 bis 8,
**dadurch gekennzeichnet, dass** ein zwischen dem Gewinde (118) und der Basisplatte (110) angeordneter Längenabschnitt (116c) des weiteren Rohrstutzens (116) gewindefrei ausgebildet ist.

10. Gebäudeeinführungsvorrichtung nach einem der Ansprüche 1 bis 9,
**dadurch gekennzeichnet, dass** zwischen dem Gewinde (118) und der Basisplatte (110) ein Dichtungselement (120) vorgesehen ist.

11. Gebäudeeinführungsvorrichtung nach Anspruch 10,
**dadurch gekennzeichnet, dass** das Dichtungselement (120) einen radialen Kragen (120a) aufweist.

12. Gebäudeeinführungsvorrichtung nach einem der Ansprüche 1 bis 11,
**dadurch gekennzeichnet, dass** die Basisplatte (110), der Rohrstutzen (114) und der weitere Rohrstutzen (116) miteinander einstückig ausgebildet sind.

13. Gebäudeeinführungsvorrichtung nach einem der Ansprüche 1 bis 11,
**dadurch gekennzeichnet, dass** der Rohrstutzen (214) und der weitere Rohrstutzen (216) miteinander einstückig ausgebildet sind und die aus Rohrstutzen (214) und weiterem Rohrstutzen (216) gebildete Einheit ferner eine einstückig angeformte Ringplatte (222) aufweist, die in einer korrespondierenden Ausnehmung (224) der Basisplatte (210) relativ verdrehbar anordenbar ist.
